# EUROPEAN PATENT SPECIFICATION

(11) **EP 3 350 069 B1**
(45) Date of publication and mention of the grant of the patent: **06.11.2019**
(21) Application number: 16770460.0
(22) Date of filing: 14.09.2016
(51) Int. Cl.: B62K 21/18, F16D 1/08

(54) **TUBULAR AXIS CONNECTION SYSTEM**
VERBINDUNGSSYSTEM FÜR ROHRFÖRMIGE ACHSE
SYSTÈME DE CONNEXION À AXE TUBULAIRE

(30) Priority: 15.09.2015 IT UB20153648
(43) Date of publication of application: 25.07.2018
(73) Proprietor: Piaggio & C. SpA, 56025 Pontedera (IT)
(72) Inventor: CECCANTI, Gianluca, 56025 Pontedera (IT); DALDON, Alex, 56025 Pontedera (IT)
(74) Representative: De Bortoli, Tiziano
(86) International application number: PCT/EP2016/071705
(87) International publication number: WO 2017/046170

(56) References cited:
- GB-A- 189 629 964
- JP-U- S 634 429
- US-A- 2 630 342

## Description

The present invention relates to a tubular axis connection system of the type comprising a screw clamp and a corresponding screw, wherein it is necessary obtaining a precise positioning with respect to the tubular axis through the precise alignment of said screw.

By way of example, a handlebar of a motor vehicle has to be fastened to the steering column which comprises a tubular axis, connected to the fork and to the corresponding front wheel. It is to be meant that the handlebar has to be assembled with extreme precision with respect to the wheel, so that the user, when he/she is driving, does not incur risks.

This positioning has to be obtained not only on the occasion of the first assembly, but even in possible subsequent adjustments.

In the known systems, a cylindrical coupling is used having fixed geometrical matchings or having a fastening hole passing through the coupling, wherein a fastening screw is inserted. However, such coupling system has a stiffness which can result to be unwished and, in case of accident, it can determine the coupling rupture.

In order to avoid this drawback a clamp of the screw type can be used, which is put on the tubular axis and subsequently tightened until the definite fastening.

However, before forcing the screw, it is necessary to make sure that the positioning is correct with the requested precision; in case of the handlebar, in the production line a device has to be used which connects to the hub or to the fork and which keeps the handlebar in a prefixed position whereas the clamp is definitively closed.

Although this procedure allows obtaining the requested result, it requires prolonged time and the use of an additional device, and furthermore it could not be repeated for example in a not specialized workshop or by the vehicle's proprietor, who then could be exposed to risks due to a not correctly performed adjustment.

GB 29,964 A and US 2,630,342 A both disclose a fastening arrangement for handlebars, wherein the correct alignment of a fastening screw through an axial translation thereof is not certainly achieved, thus making the positioning and the tightening thereof possibly not precise.

The technical problem underlying the present invention is to provide a tubular axis connection system allowing to obviate the drawback mentioned with reference to the known art.

Such problem is solved by a connection system as defined in appended claim 1.

The main advantage of the connection system according to the present invention lies in the fact of allowing the required positioning between clamp and axis upon tightening the clamp itself, without the intervention of additional devices.

The present invention will be described hereinafter according to a preferred embodiment thereof, provided by way of example and not for limitative purpose by referring to the connection of a motor vehicle handlebar to the steering column, as well as to the enclosed drawings wherein:

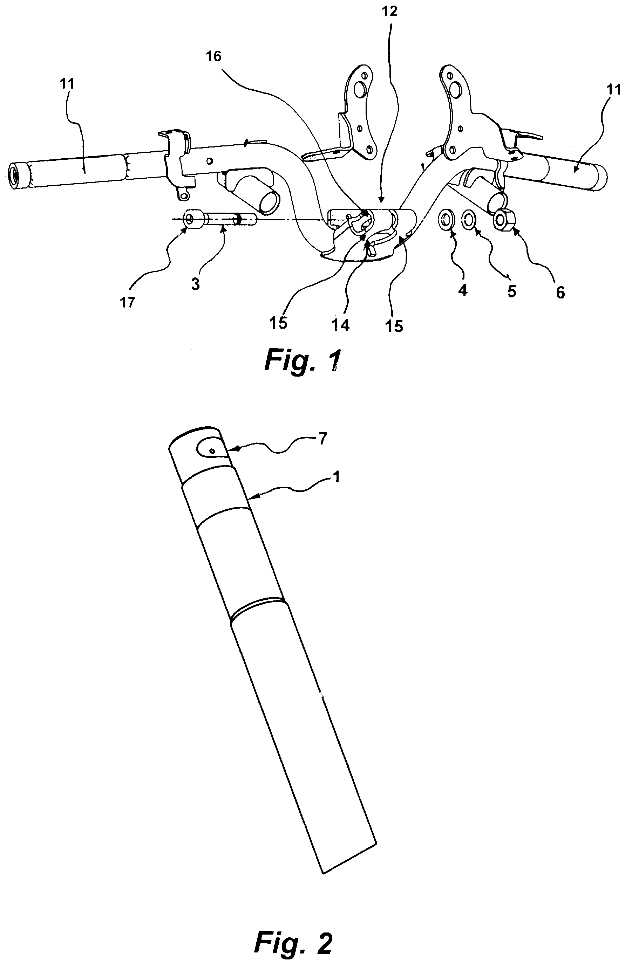

- figure 1 shows an axonometric view of a handlebar and of the related clamp in exploded view;
- figure 2 shows an axonometric view of a steering column used in the connection system according to the invention as tubular axis;
- figure 3 shows a cross section of the clamp of figure 1, taken according to a substantially perpendicular plane of the tubular axis of figure 2;
- figure 4 shows a side view of the screw of the clamp of figure 1;
- figure 4A shows an enlarged view of a first detail A of the screw of figure 4; and
- figure 4B shows an enlarged view of a second detail B of the screw of figure 4.

By referring to the figures, a handlebar is designated with 10; it has two end extensions 11 corresponding to the knobs and a central portion 2 comprising a clamp 12 welded to the handlebar 10.

In the clamp 12 there is a through-seat 14 aimed at receiving a steering column 1 which, through a fork, is associated to the front wheel of a (not represented) motor vehicle.

Said through-seat 14 is defined by a pair of opposed branches 15, therethrough, in substantially conventional way, a clamping seat 16 is formed which is engaged by a clamping screw 3 having a head 17 which, in the present example, is of the embedded hexagon type.

The clamping of the screw 3 is obtained with a clamping nut 6 which is arranged at the end of the clamping seat 16 opposite to the one wherein the screw is inserted.

Between the nut 6 and the clamping seat 16 there are a first locking washer 4 and a second resting washer 5 for the nut 6.

In the herein described connection system, the clamping screw 3 of the clamp 12 has a central cylindrical section 8 and the tubular axis 1, that is the steering column, has a notch 7 equipped with a cylindrical surface with shape complementary to said central cylindrical section 8, so that they can match perfectly, with a continuous contact on the whole surface of the notch 7.

It is to be meant that central cylindrical section 8 and notch 7 could have different surfaces from cylindrical surfaces, however complementary therebetween.

Moreover, the clamping seat 16 of the clamp 12 comprises two matching surfaces: in particular a first matching surface 18, corresponding to the distal end 19 or tailing end of the central cylindrical section 8, and a second matching surface 20 corresponding to the proximal end 21 or heading end of the screw 3 and of the central cylindrical section 8.

The distal end 19 or tailing end of the central cylindrical section 8 lies between the latter and a threaded section 9. It comprises a matching 22 with larger constant diameter than the diameter of the central cylindrical section 8: the matching 22 is formed by two joining grooves, a first joining groove 23 between the matching 22 and the cylindrical section 8; and a second joining groove 24 between the matching 22 and the threaded section.

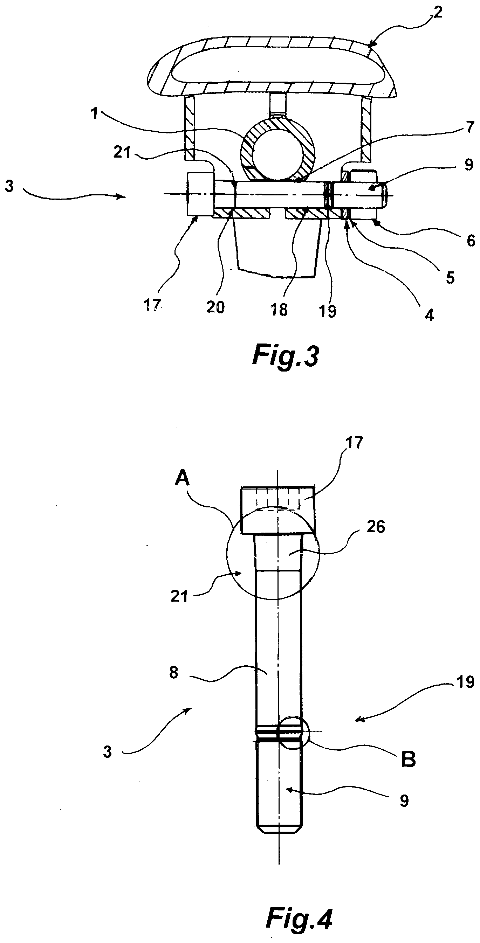

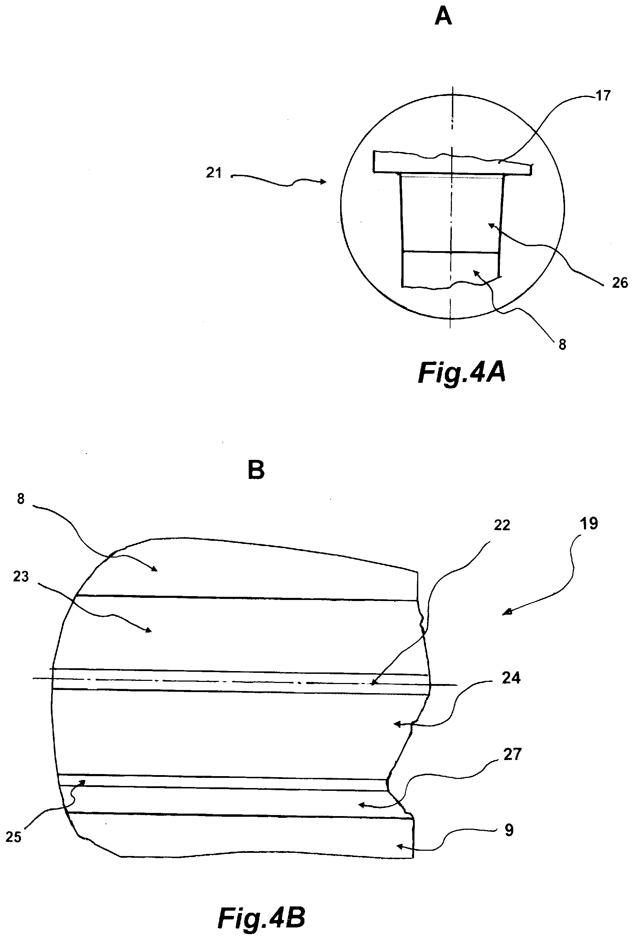

The first joining groove 23 simply has truncated conical shape, to recover the smallest diameter between matching 22 and cylindrical section 8; whereas the second groove 24 has a truncated conical section, too, with a greater conical angle with respect to the previous one (figure 4B), an additional cylindrical surface 25 with smaller diameter than the one of the threaded section 9, with last truncated conical joining surface 27. It is to be noted that the threaded section 9 has a slightly larger outer diameter than that of the central cylindrical section 8.

The proximal end 21 or heading end of the screw 3 and of the central cylindrical section 8 has a section with diameter 26 increasing from the central cylindrical section 8 to the head 17 of the screw 3, in particular with truncated conical shape (figure 4A).

The effect of such section 26, in combination with the matching 22, makes that the clamping of the screw 3, implemented by tightening the nut 6 on the threaded section, determines the axial translation of the screw 3, that is the shifting of the screw 3 according to a direction substantially defined by the axis thereof.

However, the larger diameter of the matching 22 which scrapes by contact on the respective first matching surface 18, makes that the section with increasing diameter 26 scrapes too on the respective second matching surface 20 while gradually inserting in the clamping seat 16.

This latter scraping involves a substantial translation of the central cylindrical section 8 of the screw in direction of the notch 7 until implementing a coupling between cylindrical surface of the notch 7 and central cylindrical section 8 with a contact without solution of continuity between the faced solutions.

Therefore, if the clamp 12 were in a different angular position with respect to the tubular axis 1 than the correct one, thereto said coupling between notch 7 and central cylindrical section 8 corresponds once the clamping is completed, the clamping of the screw 3 and the translation of the central cylindrical section would involve the rotation of the clamp 12 around the tubular axis 1 until implementing the coupling thereto the correct positioning of the clamp with respect to the tubular axis 1 corresponds.

It is further to be noted that what described above allows to implement a simpler and cheaper assembly of the handlebar on the respective tubular axis, with a connection system implementing a substantial self-centering, without having to recourse to additional equipment.

The above-described profile of the screw 3 is also drawn to ease the insertion and extraction of the same from the seat thereof.

To the above-described connection system a person skilled in the art, in order to satisfy additional and contingent needs, could introduce several additional modifications and variants, all however within the protective scope of the present invention, as defined by the enclosed claims.

## Claims

1. A tubular axis connection system of the type comprising a screw clamp (12) wherein:
• the screw (3) of the clamp (12) has a central cylindrical section (8) and the tubular axis (1) has a notch (7) equipped with a surface with shape complementary to that of said central cylindrical section (8), apt to couple with said central cylindrical section (8);
• the clamp (12) has a clamping seat (16) of the screw (3) comprising two matching surfaces: a first matching surface (18) corresponding to the distal end (19) or tailing end of the central cylindrical section (8), having a matching (22) with larger constant diameter than the thickness or equivalent diameter of the central cylindrical section (8); and a second matching surface (20) corresponding to the proximal end (21) or heading end of the screw (3), having a section with diameter (26) increasing from the central cylindrical section (8) to the head of the screw (17), the clamping of the screw (3) involving the translation of the central cylindrical section (8) of the screw (3) in the direction of said notch (7) until implementing the above-mentioned coupling thereto the correct positioning of the clamp (12) with respect to the tubular axis (1) corresponds, **characterized in that** the matching (22) is formed by two joining grooves, a first joining groove (23) between the matching (22) and the central cylindrical section (8); and a second joining groove (24) between the matching (22) and a threaded section (9), the first joining groove (23) being with truncated conical shape; the second groove (24) having a truncated conical section, too, with a greater conical angle with respect to the previous one.

2. The connection system according to claim 1, wherein the clamping of the screw (3) is obtained with a clamping nut (6) which is arranged at the end of the clamping seat (16) opposite to the one wherein the screw (3) is inserted.

3. The connection system according to claim 2, wherein between the nut (6) and the clamping seat (16) there are a first locking washer (4) and a second resting washer (5) for the nut (6).

4. The connection system according to claim 1, wherein the central cylindrical section (8) is cylindrical, the notch (7) being equipped with a cylindrical surface with shape complementary to said central cylindrical section (8).

5. The connection system according to claim 1, wherein the second groove (24) has an additional cylindrical surface (25) with smaller diameter than the one of the threaded section (9).

6. The connection system according to claim 1, wherein the threaded section (9) has a larger outer diameter than the one of the central cylindrical section (8).

7. The connection system according to claim 1, wherein the section with increasing diameter (26) has truncated conical shape.

8. A handlebar and steering column set comprising a connection system according to anyone of the previous claims.

## Patentansprüche

1. Verbindungssystem für rohrförmige Achse des Typs, der eine Schraubklemme (12) umfasst, wobei:
• die Schraube (3) der Klemme (12) einen zentralen zylindrischen Abschnitt (8) aufweist und die rohrförmige Achse (1) eine Kerbe (7) aufweist, die mit einer Fläche ausgestattet ist, deren Form zu der des zentralen zylindrischen Abschnitts (8) komplementär ist, so dass sie mit dem zentralen zylindrischen Abschnitt (8) gekoppelt werden kann,
• die Klemme (12) einen Klemmsitz (16) der Schraube (3) aufweist, der zwei paarige Flächen umfasst: eine erste paarige Fläche (18), die dem distalen Ende (19) oder dem Schwanzende des zentralen Zylinderabschnitts (8) entspricht und einen passenden Durchmesser (22) mit größerem konstantem Durchmesser als die Dicke oder der äquivalente Durchmesser des zentralen Zylinderabschnitts (8) aufweist, und eine zweite paarige Fläche (20), die dem proximalen Ende (21) oder dem Kopfende der Schraube (3) entspricht, mit einem Abschnitt mit einem Durchmesser (26), der vom zentralen zylindrischen Abschnitt (8) bis zum Kopf der Schraube (17) zunimmt, das Klemmen der Schraube (3) verursacht das Verschieben des zentralen zylindrischen Abschnitts (8) der Schraube (3) in Richtung der Kerbe (7) bis zur Durchführung der oben genannten Kopplung daran die richtige Positionierung der Klemme (12) in Bezug auf die rohrförmige Achse (1) übereinstimmt, **dadurch gekennzeichnet, dass** die Paarung (22) durch zwei Verbindungsnuten, eine erste Verbindungsnut (23) zwischen der Paarung (22) und dem zentralen zylindrischen Abschnitt (8) und eine zweite Verbindungsnut (24) zwischen der Paarung (22) und einem Gewindeabschnitt (9) gebildet ist, wobei die erste Verbindungsnut (23) eine kegelstumpfförmige Form aufweist, wobei die zweite Nut (24) ebenfalls einen kegelstumpfförmigen Abschnitt mit einem größeren kegelförmigen Winkel gegenüber der vorherigen aufweist.

2. Verbindungssystem nach Anspruch 1, wobei die Klemmung der Schraube (3) mit einer Klemmmutter (6) erfolgt, die am Ende des Klemmsitzes (16) gegenüber demjenigen angeordnet ist, bei dem die Schraube (3) eingesetzt ist.

3. Verbindungssystem nach Anspruch 2, wobei zwischen der Mutter (6) und dem Klemmsitz (16) eine erste Sicherungsscheibe (4) und eine zweite ruhende Scheibe (5) für die Mutter (6) vorgesehen sind.

4. Verbindungssystem nach Anspruch 1, wobei der zentrale zylindrische Abschnitt (8) zylindrisch ist, wobei die Kerbe (7) mit einer zylindrischen Fläche mit einer zu dem zentralen zylindrischen Abschnitt (8) komplementären Form ausgestattet ist.

5. Verbindungssystem nach Anspruch 1, wobei die zweite Nut (24) eine zusätzliche zylindrische Fläche (25) mit einem kleineren Durchmesser als dem des Gewindeabschnitts (9) aufweist.

6. Verbindungssystem nach Anspruch 1, wobei der Gewindeabschnitt (9) einen größeren Außendurchmesser aufweist als der des zentralen zylindrischen Abschnitts (8).

7. Verbindungssystem nach Anspruch 1, wobei der Abschnitt mit zunehmendem Durchmesser (26) eine kegelstumpfförmige Form aufweist.

8. Lenker- und Lenksäulensatz, umfassend ein Verbindungssystem gemäß einem der vorherigen Ansprüche.

## Revendications

1. Système de raccordement d'axe tubulaire du type comprenant une vis de serrage (12), dans lequel :
• la vis (3) du collier de serrage (12) présente une section centrale cylindrique (8) et l'axe tubulaire (1) comporte une entaille (7) équipée d'une surface de forme complémentaire à celle de ladite section centrale cylindrique (8), pouvant se coupler à ladite section centrale cylindrique (8) ;
• le collier de serrage (12) comporte une assise de serrage (16) de la vis (3) comprenant deux surfaces d'appariement : une première surface d'appariement (18) correspondant à l'extrémité distale (19) ou extrémité de queue de la section centrale cylindrique (8), comportant un appariement (22) d'un diamètre constant supérieur à l'épaisseur ou au diamètre équivalent de la section centrale cylindrique (8) ; et une seconde surface d'appariement (20) correspondant à l'extrémité proximale (21) ou extrémité de tête de la vis (3), comportant une section dont le diamètre (26) augmente de la section centrale cylindrique (8) à la tête de la vis (17), le serrage de la vis (3) impliquant le déplacement de la section centrale cylindrique (8) de la vis (3) dans la direction de ladite entaille (7) jusqu'à la mise en œuvre du couplage mentionné ci-dessus auquel correspond le positionnement correct du collier de serrage (12) par rapport à l'axe tubulaire (1), **caractérisé en ce que** l'appariement (22) est formé par deux rainures de jonction, une première rainure de jonction (23) entre l'appariement (22) et la section centrale cylindrique (8) ; et une seconde rainure de jonction (24) entre l'appariement (22) et une section filetée (9), la première rainure de jonction (23) étant de forme conique tronquée ; la seconde rainure (24) comportant également une section conique tronquée, présentant un angle conique supérieur à celui de la section précédente.

2. Système de raccordement selon la revendication 1, dans lequel le serrage de la vis (3) est obtenu par le biais d'un écrou de serrage (6) qui est disposé à l'extrémité de l'assise de serrage (16) opposée à l'extrémité dans laquelle la vis (3) est insérée.

3. Système de raccordement selon la revendication 2, dans lequel entre l'écrou (6) et l'assise de serrage (16) se trouvent une première rondelle de blocage (4) et une seconde rondelle de support (5) pour l'écrou (6).

4. Système de raccordement selon la revendication 1, dans lequel la section centrale cylindrique (8) est cylindrique, l'entaille (7) étant équipée d'une surface cylindrique de forme complémentaire à celle de ladite section centrale cylindrique (8).

5. Système de raccordement selon la revendication 1, dans lequel la seconde rainure (24) présente une surface cylindrique supplémentaire (25) d'un diamètre inférieur à celui de la section filetée (9).

6. Système de raccordement selon la revendication 1, dans lequel la section filetée (9) présente un diamètre externe supérieur à celui de la section centrale cylindrique (8).

7. Système de raccordement selon la revendication 1, dans lequel la section de diamètre croissant (26) présente une forme conique tronquée.

8. Ensemble guidon et colonne de direction comprenant un système de raccordement selon l'une quelconque des revendications précédentes.
